(19) **Europäisches Patentamt / European Patent Office / Office européen des brevets**

(11) **EP 4 742 550 A1**

(12) **EUROPEAN PATENT APPLICATION**
published in accordance with Art. 153(4) EPC

(43) Date of publication:
**13.05.2026 Bulletin 2026/20**

(21) Application number: **24836272.5**

(22) Date of filing: **01.07.2024**

(51) International Patent Classification (IPC):
*H04B 7/0456* (2017.01)   *H04B 7/0404* (2017.01)
*H04B 7/06* (2006.01)   *H04W 72/231* (2023.01)
*H04W 72/232* (2023.01)   *H04W 72/21* (2023.01)
*H04W 72/1268* (2023.01)   *H04W 8/24* (2009.01)
*H04L 5/00* (2006.01)

(52) Cooperative Patent Classification (CPC):
**H04B 7/0404; H04B 7/0456; H04B 7/06;
H04L 5/00; H04W 8/24; H04W 72/1268;
H04W 72/21; H04W 72/231; H04W 72/232**

(86) International application number:
**PCT/KR2024/009204**

(87) International publication number:
**WO 2025/009824 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.07.2023 KR 20230086724**

(71) Applicant: **LG Electronics Inc.**
**Yeongdeungpo-gu**
**Seoul 07336 (KR)**

(72) Inventors:
• **PARK, Haewook**
  Seoul 06772 (KR)
• **YANG, Suckchel**
  Seoul 06772 (KR)
• **KIM, Hyungtae**
  Seoul 06772 (KR)
• **KANG, Jiwon**
  Seoul 06772 (KR)

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING SIGNAL IN WIRELESS COMMUNICATION SYSTEM**

(57)    A method by which a terminal transmits a signal in a wireless communication system, according to at least one of embodiments disclosed in the present specification, comprises the steps of: receiving downlink control information (DCI) for uplink scheduling; and transmitting a physical uplink shared channel (PUSCH) in which channel state information (CSI) is multiplexed on the basis of the DCI, wherein, on the basis of a rank of the PUSCH transmission exceeding 4 and the PUSCH including a plurality of codewords (CWs), the CSI is multiplexed on a CW having the highest modulation and coding scheme (MCS) among the plurality of CWs, and the terminal may not expect that an uplink shared channel (UL-SCH) indication field in the DCI will be set to a first value for not performing UL-SCH transmission

**FIG. 10**

## Description

### TECHNICAL FIELD

The present disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

The technical task to be achieved is to provide a method and apparatus for accurately and efficiently performing wireless signal transmission and reception.

The technical task to be achieved is not limited to this, and other technical tasks can be inferred from embodiments.

### TECHNICAL SOLUTION

According to an aspect, a method for transmitting a signal by a user equipment (UE) in a wireless communication system may include receiving downlink control information (DCI) for uplink scheduling, and transmitting a physical uplink shared channel (PUSCH) on which channel state information (CSI) is multiplexed based on the DCI. Based on a rank of the PUSCH transmission being greater than 4 and the PUSCH including a plurality of codewords (CWs), the CSI may be multiplexed on a CW having a highest modulation and coding scheme (MCS) among the plurality of CWs. The UE may not expect that an uplink shared channel (UL-SCH) indicator field in the DCI is set to a first value (e.g., 0) for not performing UL-SCH transmission.

Based on the rank of the PUSCH transmission being greater than 4 and the PUSCH including the plurality of CWs, all of the plurality of CWs may include UL-SCHs, respectively.

Based on the rank of the PUSCH transmission being greater than 4 and the PUSCH including the plurality of CWs, no CW may be configured to include only the CSI.

The DCI may include the UL-SCH indicator field. Based on the rank of the PUSCH transmission being greater than 4 and the PUSCH including the plurality of CWs, the UE may assume that the UL-SCH indicator field is set to a second value for performing the UL-SCH transmission.

Based on the rank of the PUSCH transmission being greater than 4 and the PUSCH including the plurality of CWs, the UE may assume that a size of the UL-SCH indicator field is 0 bits.

The CSI and a first UL-SCH may be multiplexed on the CW having the highest MCS. A second UL-SCH may be multiplexed on another CW without the CSI.

Based on the rank of the PUSCH transmission being greater than 4 and the PUSCH including the plurality of CWs, the UL-SCH indicator field may be configured to provide information other than information about whether to perform the UL-SCH transmission.

A size of the UL-SCH indicator field in the DCI may be determined based on the rank of the PUSCH transmission.

The DCI may include a CSI request field set to a non-zero value.

According to another aspect, a computer-readable recording medium having recorded thereon a program for performing the above method may be provided.

According to another aspect, an apparatus for wireless communication may include a memory configured to store instructions, and a processor configured to perform operations by executing the instructions. The operations of the processor may include receiving DCI for uplink scheduling, and transmitting a PUSCH on which CSI is multiplexed based on the DCI. Based on a rank of the PUSCH transmission being greater than 4 and the PUSCH including the plurality of CWs, the CSI may be multiplexed on a CW having a highest modulation and coding scheme (MCS) among the plurality of CWs. The apparatus may not expect that a UL-SCH indicator field in the DCI is set to a first value for not performing UL-SCH transmission.

The apparatus may further include a transceiver.

The apparatus may be a UE operating in a wireless communication system.

The apparatus may be a processing device configured to control a UE operating in a wireless communication system.

According to another aspect, a method for receiving a signal by a base station (BS) in a wireless communication system may include transmitting DCI for uplink scheduling, and receiving a PUSCH on which CSI is multiplexed based on the DCI. Based on a rank of the PUSCH transmission being greater than 4 and the PUSCH including a plurality of CWs, the BS may set a UL-SCH indicator field in the DCI to a second value for UL-SCH scheduling for all of the plurality of CWs, and obtain the CSI from a CW having a highest MCS among the plurality of CWs.

According to another aspect, a BS for wireless communication may include a memory configured to store instructions, and a processor configured to perform operations by executing the instructions. The operations of the processor may include transmitting DCI for uplink scheduling, and receiving a PUSCH on which CSI is multiplexed based on the DCI. Based on a rank of the PUSCH transmission being greater than 4 and the PUSCH including a plurality of CWs, the BS may set a UL-SCH indicator field in the DCI to a second value for UL-SCH scheduling for all of the plurality of CWs, and obtain the CSI from a CW having a highest MCS among the plurality of CWs.

## ADVANTAGEOUS EFFECTS

According to at least one of the disclosed embodiments, wireless signal transmission and reception processes can be performed accurately and efficiently.

The technical effects are not limited thereto, and other technical effects can be inferred from embodiments.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 illustrates a multi-TRP transmission.

FIG. 9 illustrates a method of mapping UCI onto PUSCH in an existing NR standard.

FIG. 10 illustrates an implementation example of a method for transmitting a signal by a user equipment (UE) in a wireless communication system according to an embodiment.

FIG. 11 illustrates an implementation example of a method for receiving a signal by a base station (BS) in a wireless communication system according to an embodiment.

FIGS. 12 to 15 illustrate a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

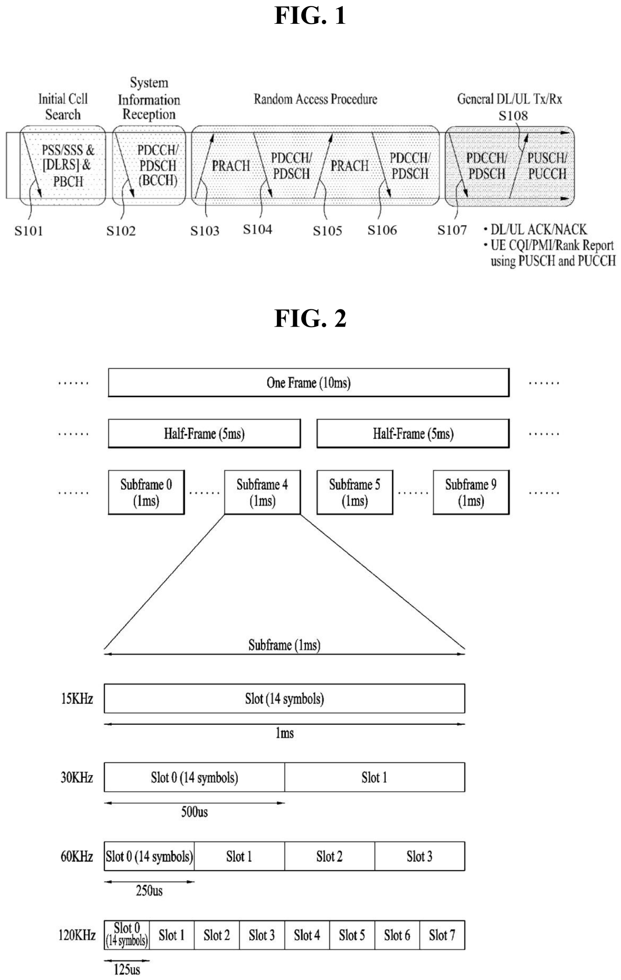

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

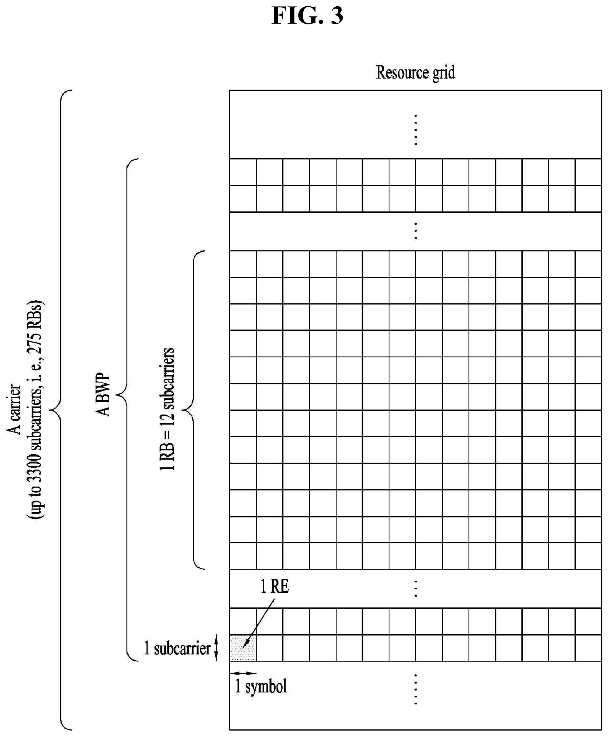

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

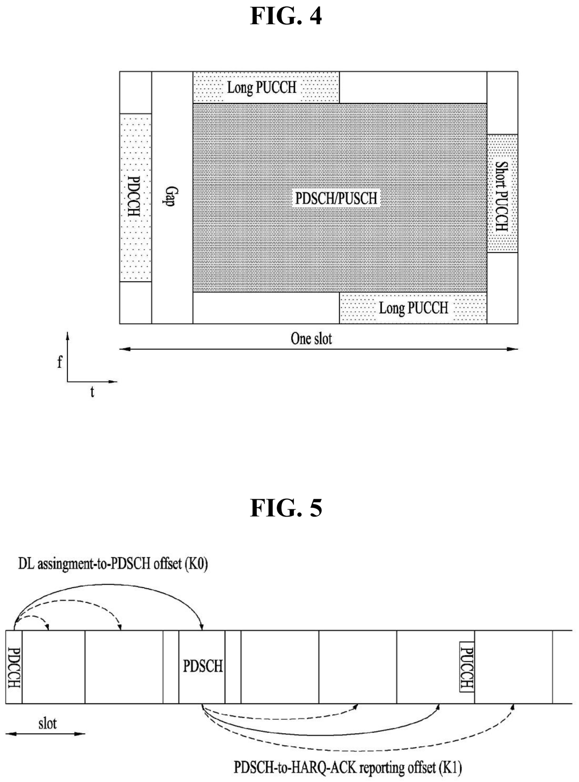

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.

monitoringSlotPeriodicityAndOffset: A PDCCH monitoring periodicity (in slots) and a PDCCH monitoring offset (in slots).

monitoringSymbolsWithinSlot: PDCCH monitoring symbols in a slot (e.g., the first symbol(s) of a CORESET).

nrofCandidates: The number of PDCCH candidates (one of 0, 1, 2, 3, 4, 5, 6, and 8) for each AL= {1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |

(continued)

| DCI format | Usage |
|---|---|
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

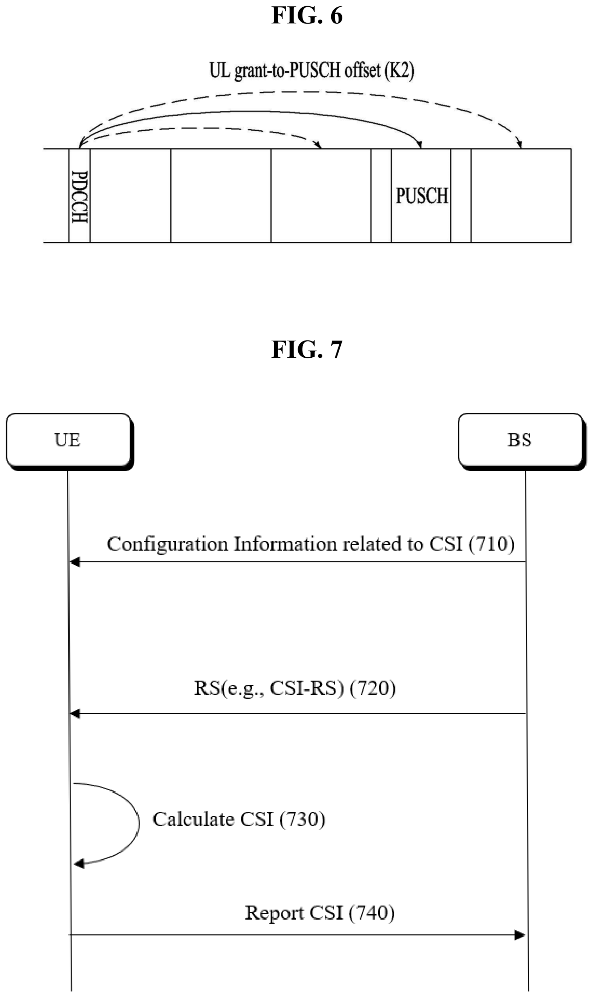

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of multiple TCI state configurations may be configured for the UE through a higher layer parameter PDSCH-Config. Each TCI state is associated with a QCL configuration parameter between one or two DL reference signals and the DM-RS port of a PDSCH. The QCL may include qcl-Type1 for a first DL RS and qcl-Type2 for a second DL RS. The QCL type may correspond to one of the followings.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Operations related to multiple transmission and reception points (M-TRPs)

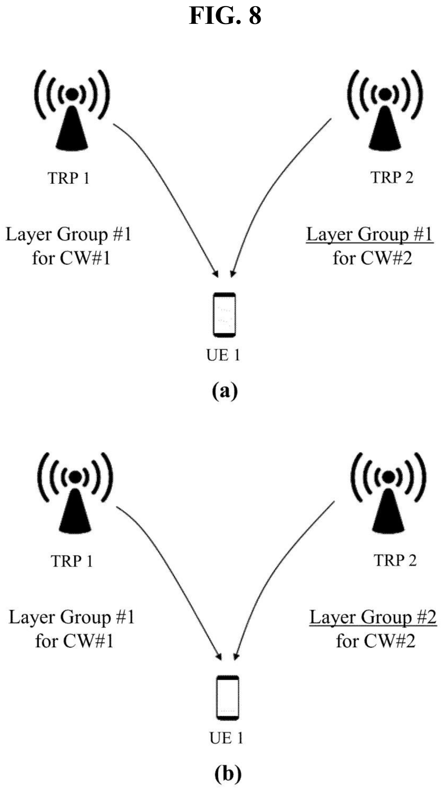

FIG. 8 illustrates multi-TRP (M-TRP) transmission. Referring to FIG. 8-(a), a group of layers transmitting the same codeword (CW) (or TB) correspond to different TRPs. Referring to FIG. 8-(b), different CWs are transmitted through layer groups of different TRPs. In this case, it may be assumed that the TBs corresponding to CW #1 and CW #2 in the drawing are the same. In other words, CW # 1 and CW #2 mean that the same TB is converted into different CWs through channel coding, etc., by different TRPs. Therefore, it may be considered as an example of repeated transmission of the same TB. In the case of FIG. 8-(b), there may be a drawback of a higher coding rate corresponding to the TB, compared to FIG. 8-(a). However, FIG. 8-(b) has an advantage that, depending on the channel environment, the coding rate may be adjusted by indicating different values of redundancy version (RV) for encoded bits generated from the same TB, or the modulation order of each CW may be adjusted.

According to the method illustrated in FIGS. 8-(a) and 8-(b), the same TB is repeatedly transmitted through different layer groups. In addition, as each layer group is transmitted by different TRPs/panels, the probability that the UE receives data successfully may increase. This method is referred to as a spatial division multiplexing (SDM) based M-TRP URLLC transmission. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

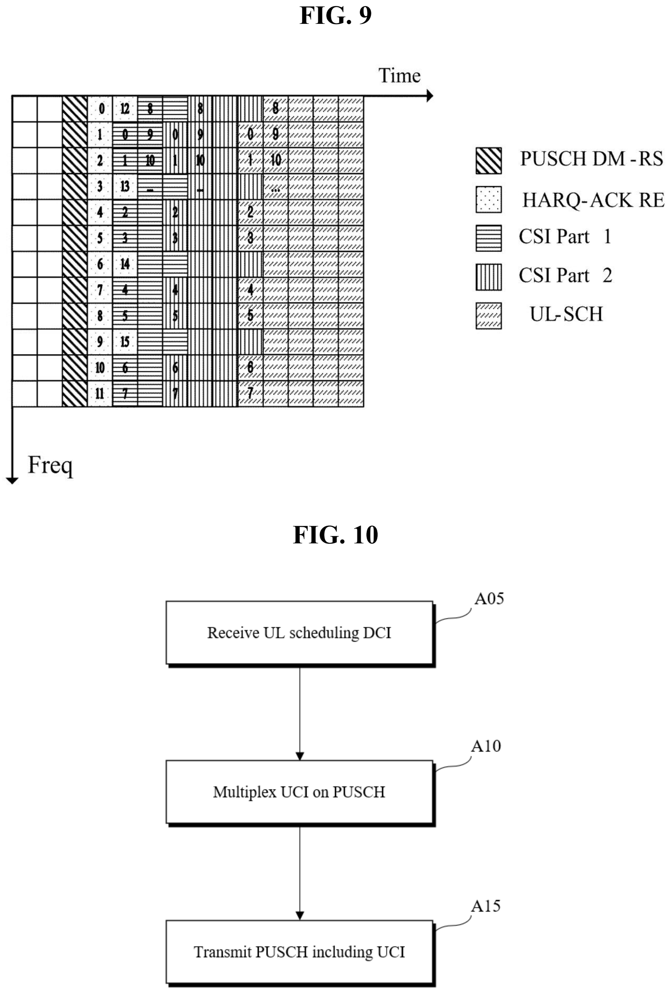

FIG. 9 illustrates UCI mapped onto PUSCH in the existing NR standard.

The Distributed UCI mapping rule is applied within the OFDM symbol by comparing the unmapped UCI REs with the available REs in the OFDM symbol.

- HARQ-ACK REs are mapped to available REs in a frequency-first manner, starting with the first non-DM-RS symbol after the first DMRS symbol.
- CSI part 1 REs are mapped to available REs in a frequency-first manner, starting with the first non-DM-RS symbol.
- CSI part 2 REs are mapped to available REs in a frequency-first manner, starting with the first non-DM-RS symbol.

Referring to FIG. 9, unlike in LTE, HARQ-ACK REs are mapped first, followed sequentially by mapping of CSI part 1 and CSI part 2, followed by mapping of PUSCH. If the REs for HARQ-ACK/CSI do not fully fit within a single symbol, they first fill up one symbol, and the remaining REs are uniformly mapped to other symbols in a distributed manner. Then, the subsequent UCIs are mapped in turn according to the rules above.

## UL transmission of multi-CW (or TB) based on a plurality of antenna ports

A description will be given below of a UE that transmits multiple codewords (CWs) through a plurality of transmission antenna ports on UL and a method for supporting the same. The embodiments described later may be used for, but are not limited to, 8Tx UL codebook-based transmission, particularly 2-CW transmission of a UE with multiple antennas and/or multiple panels, for example, in an environment like New radio access technology (RAT) with multiple antennas/panels. The term CW may be replaced by transport block (TB).

In the existing NR standard, 1 CW is supported based on a maximum of 4 antenna ports for UL transmission. However, methods for supporting 2 CWs based on a maximum of 8 transmission antenna ports for UL transmission are under discussion in the recent NE standardization. The main standardization discussion topics related to UL 2-CW support are summarized in Table 6.

[Table 6]

| |
|---|
| (i) To support dual CW PUSCH transmission for rank>4 by an 8TX UE, for MCS indication, support a second MCS field (5 bits) is indicated for the second codeword |
| (ii) To support dual CW PUSCH transmission for rank>4 by an 8TX UE, a second set of NDI (1 bit) and RV (2 bits) fields are indicated. |
| (iii) To support UCI multiplexing on PUSCH for transmission with rank>4 by an 8TX UE, UCI is always multiplexed only on one of the scheduled CWs. |
| - UCI is always multiplexed only on CW with the higher MCS index (if MCS indices are the same, UCI is multiplex on the first CW)<br>- in case of PUSCH retransmission, the initial MCS is used for CW selection.<br>(iv) For dual CW PUSCH transmission by an 8TX UE, PHY layer priority indicator (if configured) is applied on both codewords.<br>(v) For an 8TX UE, there is a single UL-SCH indicator in a scheduling DCI (i.e., formats 0_1, 0_2).<br>FFS whether/how to support CSI-only PUSCH when rank>4. |

As described in Table 6, when the (maximum) tank exceeds 4, 2-CW transmission is supported. For 2-CW scheduling, an MCS field, an NDI field, and an RV field for the second CW are added to DCI. When UCI multiplexing is required, the UCI is multiplexed only on a CW with a higher MCS out of the two CWs. However, when the CWs are the same, it is multiplexed on the first CW. When there is a priority indication for the corresponding UL transmission in the physical layer, the indicated priority is applied to both of the CWs. Further, a UL grant DCI format for 2-CW scheduling includes a single UL-SCH indicator field, as before. In other words, two UL-SCH indicator fields are not individually provided for the two respective CWs.

As illustrated in Table 6, further discussion/definition is needed (FFS) regarding whether to support a CSI-only PUSCH in 2-CW transmission with rank > 4, and if supported, how to apply/determine/indicate a CSI-only CW for two CWs.

Therefore, the present disclosure proposes a method for applying/assuming a UL-SCH indicator related to CSI-only and its signaling during 2-CW transmission (i.e., rank > 4 transmission).

In the following description, a case scheduled/indicated with rank > 4 may mean a case where the number of layers indicated by DCI (e.g., the number of layers indicated by a precoding and number of layers field) exceeds 4. In other words, when the number of layers indicated by the DCI (e.g., the number of layers indicated by the precoding and number of layers field) exceeds 4, the UE performs 2-CW (or 2-TB) transmission.

First, the UL-SCH indicator field defined in the existing NR standard will be described. Table 7 is an excerpt of the UL-SCH indicator defined in the existing NR Rel. 17 standard document, TS 38.212, which supports UL transmission of 1 CW through a maximum of 4 transmission antenna ports.

[Table 7]

| UL-SCH indicator - 0 or 1 bit as follows<br>- 0 bit if the number of scheduled PUSCH indicated by the Time domain resource assignment field is larger than 1;<br>- 1 bit otherwise. A value of "1" indicates UL-SCH shall be transmitted on the PUSCH and a value of "0" indicates UL-SCH shall not be transmitted on the PUSCH. If a UE does not support triggering SRS only in DCI, except for DCI format 0_1 with CRC scrambled by SP-CSI-RNTI, the UE is not expected to receive a DCI format 0_1 with UL-SCH indicator of "0" and CSI request of all zero(s). If a UE supports triggering SRS only in DCI, except for DCI format 0_1 with CRC scrambled by SP-CSI-RNTI, the UE is not expected to receive a DCI format 0_1 with UL-SCH indicator of "0", CSI request of all zero(s) and SRS request of all zero(s). |
| --- |

The UL-SCH indicator is a 1-bit indicator field included in DCI, introduced to explicitly indicate whether a corresponding CW/TB carries a UL-SCH. Referring to Table 7, the UL-SCH indicator field, in combination with the CSI request field, indicates whether the corresponding CW/TB is scheduled to carry UCI with a UL-SCH or UCI without a UL-SCH. All bits of the CSI request field being zero means that CSI is not requested.

As noted from Table 6, DCI that schedules 2 CWs also includes only one UL-SCH indicator field, as before. When this single UL-SCH indicator field is extended to the 2-CW scenario, a scheduled PUSCH may be represented as illustrated in Table 8.

[Table 8]

| CASE | 1st CW (e.g., higher MCS) | 2nd CW |
| --- | --- | --- |
| Case 1 | {UL-SCH + UCI} or {UL-SCH} | UL-SCH |
| Case 2 | UCI-only | UL-SCH |
| Case 3 | UCI-only | UCI-only |

As described with reference to Table 6, UCI is multiplexed on a CW with a higher MCS out of two CWs (or the first CW if both MCS values are the same). For convenience of description, it is assumed in Table 8 that the first CW is scheduled with a higher MCS than the second CW. However, the proposals of the present disclosure may also be applied in the opposite case (i.e., where the second CW has a higher MCS than the first CW). In Case 1 of Table 8, when UCI is present, the UCI is mapped to the first CW. When the value of the UL-SCH indicator is "1" and the code points of the CSI request field are not all zeros, the first CW is transmitted as UCI with a UL-SCH. When the value of the UL-SCH indicator is "1" and the code points of the CSI request field are all zeros, only a UL-SCH is transmitted in the first CW. That is, the transmitted combination is a UL-SCH in the first CW and a UL-SCH in the second CW.

**Proposal 1**

In relation to Case 1 in Table 8, the following is proposed for the assumption regarding the presence or absence of the UL-SCH indicator and a UL-SCH.

When 2-CW PUSCH transmission (rank > 4) is scheduled (e.g., through DCI formats 0_1 and 0_2), it is configured such that UL-SCHs are always included in both TBs/CWs. When 1-CW PUSCH transmission is scheduled, the presence/inclusion of UL-SCH transmission may be determined according to the UL-SCH indicator. For example, when a 2-CW PUSCH is scheduled for the UE, the UE may ignore the UL-SCH indicator included in scheduling DCI or always assume that it is "1". For instance, when a 2-CW PUSCH is scheduled for the UE, the UE may assume that the UL-SCH indicator field in the DCI is always configured as 0 bits, and a BS may reduce DCI payload by configuring the UL-SCH indicator field to 0 bits.

Proposal 1 primarily considers Case 1 (though applicable to Case 2 as well) where UL-SCHs are always included in both CWs during dual CW transmission. Therefore, the UL-SCH indicator may not be needed in DCI for dual CW scheduling. The UL-SCH indicator is needed in DCI for single-CW transmission (when rank is 4 or less). For dual CW scheduling, one of the following options may be configured/used for the UL-SCH indicator.

(1) Option 1

When a dual-CW PUSCH is scheduled, the UE/BS assumes/configures the UL-SCH indicator as 0 bits.

Generally, when the maximum payloads of single-CW transmission and dual-CW transmission are compared, the maximum payload of dual CWs is greater than that of a single CW due to the addition of a second set of MCS/RV/NDI. Therefore, when the maximum rank is set to be greater than 4 (e.g., max rank = 6 or 8), the field size of the UL-SCH indicator may be excluded from DCI maximum payload calculation. When the maximum rank is 4 or less (e.g., max rank = 1 or 2 or 4), this is single-CW transmission, and thus the UL-SCH indicator field is included in DCI maximum payload calculation.

Consequently, the payload size of a DCI format supporting dual-CW PUSCH scheduling may be determined based on (e.g., as the sum of) the sizes of fields (e.g., the second set of MCS/RV/NDI) required when scheduling a dual-CW PUSCH and the size of the 0-bit UL-SCH indicator field.

(2) Option 2

When a dual-CW PUSCH is scheduled, the UL-SCH indicator may be reused for the purpose of indicating another (existing or new) parameter/indicator in the DCI, instead of indicating the presence or absence of UL-SCH transmission. For example, when a dual-CW PUSCH is scheduled, the UL-SCH indicator may be reused to indicate, but is not limited to, at least one of the following pieces of information.

- RV for 1st/2nd CW
- MCS for 1st/2nd CW
- NDI for 1st/2nd CW
- TRI/TPMI
- CW index on which UCI is multiplexed: For example, when the CSI request field is not all zeros and the value of the UL-SCH indicator is "1", the UCI is multiplexed on the first CW, and if it is "0", the UCI is multiplexed on the second CW. (Or conversely, when the value of UL-SCH indicator is "0", the UCI is multiplexed on the first CW, and when it is "1", the UCI is multiplexed on the second CW). For example, when the CSI request field is all zeros, the value of the UL-SCH indicator is ignored.

**Proposal 2**

Case 2 of Table 8 may be considered to be a special case of Case 1. In Case 2, the first CW is scheduled as UCI-only transmission, and the second CW is scheduled as UL-SCH transmission. For Case 2, the application/configuration of the UL-SCH indicator may follow Proposal 2.

When a 2-CW PUSCH (rank > 4) is scheduled (e.g., via DCI formats 0_1 and 0_2), the UE assumes that an indication (e.g., omission of UL-SCH transmission) through the UL-SCH indicator in the DCI is applied only to a specific single TB/CW index, and UL-SCH transmission is included/indicated in the other single TB/CW index.

The specific TB/CW index to which the UL-SCH indicator is applied may be determined by 1) a lower or higher TB/CW index, or 2) a TB/CW index having a higher MCS (if the MCSs of the two TBs/CWs are the same, the lower or higher TB/CW index).

A CW transmitted as UCI-only may be determined based on a UCI multiplexing rule. In the above example, it is assumed that UCI is multiplexed on the TB/CW with the higher MCS.

Case 3 refers to a case where only UCI is mapped and transmitted on both CWs/TBs. This is for a situation where there is a large amount of UCI (e.g., HARQ-ACK and/or CSI part 1 and/or CSI part 2) to be transmitted, or UCI is to be transmitted more robustly.

### Proposal 3

When a 2-CW PUSCH (rank > 4) is scheduled (e.g., via DCI formats 0_1 and 0_2), the indication through the UL-SCH indicator in the DCI may be applied to both TB/CW indexes.

(1) When the UL-SCH indicator = 0 and the CSI request field is not all zeros, the (identical) UCI is repeated without a UL-SCH over both CWs. (e.g., Case 3)

- First, the UE may perform encoding/rate-matching/RE mapping for the UCI, assuming that only one CW was scheduled, and then map the UCI mapped in this way identically (copy & paste) to the other CW.
- And/or, although the UCI mapped to each of the two CWs is identical, the size of coded UCI bits may differ between the two CWs, depending on the transmission parameters (e.g., MCS and so on) of each CW, and the coded UCI bits may be mapped to each CW.
- And/or, while a CSI report indicated by the CSI request field is mapped (repeatedly) to both CWs, other UCI (e.g., HARQ-ACK) may be mapped to only a specific single CW (this specific CW may be determined by a CW index with a higher MCS out of the two CWs, or a lower CW index if the MCSs of the two CWs are the same).

(2) When the UL-SCH indicator = 1 and the CSI request field is not all zeros, the UCI is multiplexed on a CW corresponding to a highest MCS, or on the first CW if the MCS values of the two CWs are the same.

Proposal 1/2/3 described above is advantageous in that dual-CW PUSCH transmission may be effectively performed without ambiguity in an indication from a BS, even when a single UL-SCH indicator is used.

However, Proposal 3 may violate the existing consensus rule for UCI multiplexing (that UCI is multiplexed on a single CW). Therefore, the UE may not expect a case where only UCI is transmitted on two CWs. That is, when an indication through the UL-SCH indicator in DCI in Proposal 3 is applied to both TB/CW indexes, the UE does not expect to be scheduled with UL-SCH indicator = 0, a CSI request field of all zeros, and rank > 4. For example, when rank > 4 is indicated (e.g., when number of layers > 4 is indicated by UL grant DCI like DCI format 0_1 or the like), the UE does not expect to receive UL grant DCI including UL-SCH indicator = 0. In other words, when rank > 4 is indicated (e.g., when number of layers > 4 is indicated by UL grant DCI like DCI format 0_1 or the like), the UE does not expect the UL-SCH indicator included in the DCI to be 0. Therefore, when rank > 4 is indicated (e.g., when number of layers > 4 is indicated by UL grant DCI like DCI format 0_1 or the like), the UE may expect to receive an UL-SCH indicator of 1, which may be understood as the same concept as the UE assuming the UL-SCH indicator included in the scheduling DCI is 1 when a 2-CW PUSCH is scheduled, as described in Proposal 1.

### Proposal 4

For dual-CW PUSCH scheduling, an indication for the presence or absence of a UL-SCH may be provided independently for each CW. This may have the advantage of increasing the scheduling freedom of the BS, compared to Proposal 1/2/3. For this purpose, the following is proposed.

When a 2-CW PUSCH (rank > 4) is scheduled (e.g., via DCI formats 0_1 and 0_2), a 2-bit UL-SCH indicator in the DCI may indicate the presence or absence of UL-SCH transmission and/or indicate a UL-SCH and UCI, for each CW. The size of the UL-SCH indicator field in the DCI may be determined based on a maximum rank value. For example, when the maximum rank is greater than 4, the UL-SCH indicator field may be 2 bits, and when the maximum rank is 4 or less, the UL-SCH indicator field may be configured as 1 bit, as before. Alternatively, the UL-SCH indicator is configured as 2 bits, where 1 bit corresponds to the existing UL-SCH indicator field, and the other 1 bit may be 1 bit from unused/remaining bits of another field (e.g., an antenna ports field) during 2-CW PUSCH scheduling.

For example, in Proposal 4, an MSB of the 2-bit UL-SCH indicator may indicate the presence/absence of UL-SCH transmission for the first CW, and an LSB thereof may indicate the presence/absence of UL-SCH transmission for the second CW.

In this case, the MSB and LSB may be indicated as illustrated in Table 9, and it may be determined whether UCI multiplexing is performed, based on the value of the CSI request field. For example, when it is scheduled that MSB = 1 and LSB = 1 in the UL-SCH indicator, and the CSI request field is a non-all-zero value, this means 1st CW: UCI with UL-SCH in Case 1. When it is scheduled that MSB = 1 and LSB = 1 in the UL-SCH indicator, and the CSI request field is all zeros, this means UCI without UL-SCH.

[Table 9]

|  | 1st CW (e.g., higher MCS) | 2nd CW | MSB | LSB |
|---|---|---|---|---|
| Case 1 | {UL-SCH + UCI} or {UL-SCH} | UL-SCH | 1 | 1 |
| Case 2-1 | UCI-only | UL-SCH | 0 | 1 |
| Case 2-2 | UL-SCH | UCI-only | 1 | 0 |
| Case 3 | UCI-only | UCI-only | 0 | 0 |

Alternatively, the codepoints of the 2-bit UL_SCH indicator may be used to represent the above cases and/or UCI mapping, as illustrated in Table 10.

[Table 10]

| Description | UL-SCH indicator |
|---|---|
| UL-SCH in two CWs | 11 |
| UL-SCH in one CW | 01 |
| No UL-SCH in two CWs | 10 |
| Reserved | 00 |

In this case, the UCI multiplexing rule may be a rule that maps UCI to a CW corresponding to a higher MCS, or to the first CW if two MCS values are the same.

Proposals 1, 2, 3, and 4 described above may be used individually or implemented by combining at least some of them.

FIG. 10 illustrates an exemplary implementation of a method for transmitting a signal by a UE in a wireless communication system according to an embodiment.

Referring to FIG. 10, the UE may receive DCI for UL scheduling (A05).

The UE may multiplex UCI on a PUSCH (A10). The UCI may include CSI.

The UE may transmit the multiplexed PUSCH based on the DCI (A15).

Based on a rank of the PUSCH transmission being greater than 4 and the PUSCH including a plurality of CWs, the CSI may be multiplexed on a CW having a highest MCS among the plurality of CWs. The UE may not expect that a UL-SCH indicator field in the DCI is set to a first value (e.g., 0) for not performing UL-SCH transmission.

Based on the rank of the PUSCH transmission being greater than 4 and the PUSCH including the plurality of CWs, all of the plurality of CWs may include UL-SCHs, respectively.

Based on the rank of the PUSCH transmission being greater than 4 and the PUSCH including the plurality of CWs, no CW may be configured to include only the CSI.

The DCI may include the UL-SCH indicator field. Based on the rank of the PUSCH transmission being greater than 4 and the PUSCH including the plurality of CWs, the UE may assume that the UL-SCH indicator field is set to a second value (e.g., 1) for performing the UL-SCH transmission.

Based on the rank of the PUSCH transmission being greater than 4 and the PUSCH including the plurality of CWs, the UE may assume that a size of the UL-SCH indicator field is 0 bits.

The CSI and a first UL-SCH may be multiplexed on the CW having the highest MCS. A second UL-SCH may be multiplexed on another CW without the CSI.

Based on the rank of the PUSCH transmission being greater than 4 and the PUSCH including the plurality of CWs, the UL-SCH indicator field may be configured to provide information other than information about whether to perform the UL-SCH transmission.

A size of the UL-SCH indicator field in the DCI may be determined based on the rank of the PUSCH transmission.

The DCI may include a CSI request field set to a non-zero value.

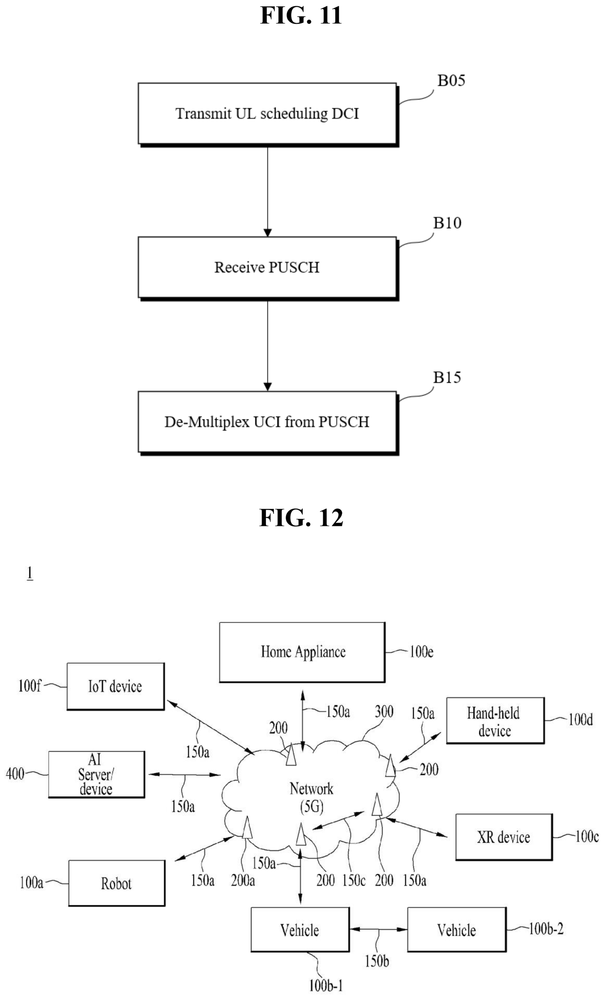

FIG. 11 illustrates an implementation example of a method for receiving a signal by a BS in a wireless communication system according to an embodiment.

Referring to FIG. 11, the BS may transmit DCI for UL scheduling (B05). The DCI may include a UL-SCH indicator field. Based on a rank of the PUSCH transmission being greater than 4 and the PUSCH including a plurality of CWs, the BS may set the UL-SCH indicator field in the DCI to a second value (e.g., 1) for UL-SCH scheduling for all of the plurality of CWs.

The BS may receive a PUSCH on which UCI is multiplexed based on the DCI (B10).

The BS may obtain the UCI from the PUSCH (B15). The UCI may include CSI. Based on the rank of the PUSCH transmission being greater than 4 and the PUSCH including the plurality of CWs, the BS may obtain the CSI from a CS having a highest MCS among the plurality of CWs.

Based on the rank of the PUSCH transmission being greater than 4 and the PUSCH including the plurality of CWs, all of the plurality of CWs may include UL-SCHs, respectively.

Based on the rank of the PUSCH transmission being greater than 4 and the PUSCH including the plurality of CWs, no CW may be configured to include only the CSI.

The CSI and a first UL-SCH may be multiplexed on the CW having the highest MCS. A second UL-SCH may be multiplexed on another CW without the CSI.

A size of the UL-SCH indicator field in the DCI may be determined based on the rank of the PUSCH transmission.

The DCI may include a CSI request field set to a non-zero value.

FIG. 12 illustrates a communication system 1 applied to the present disclosure.

Referring to FIG. 12, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

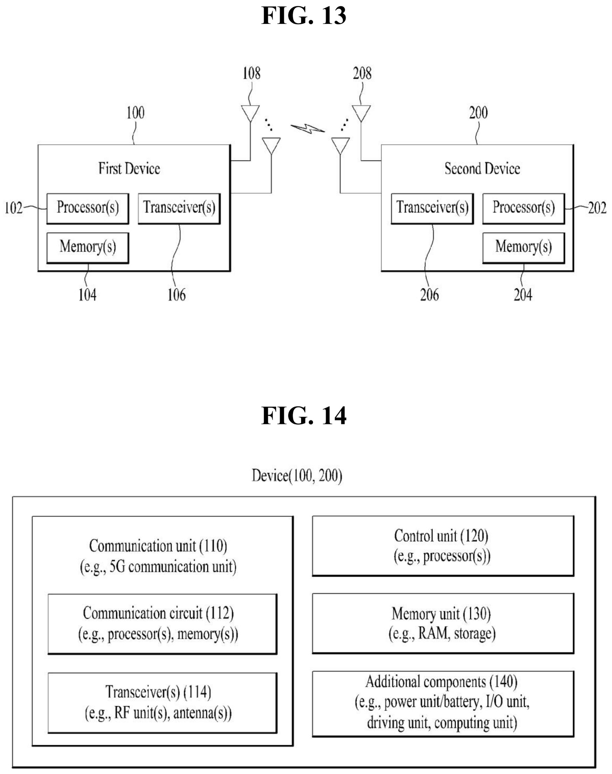

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 14 illustrates another example of a wireless device applied to the present disclosure. The wireless device may be implemented in various forms according to a use-case/service (refer to FIG. 12).

Referring to FIG. 14, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

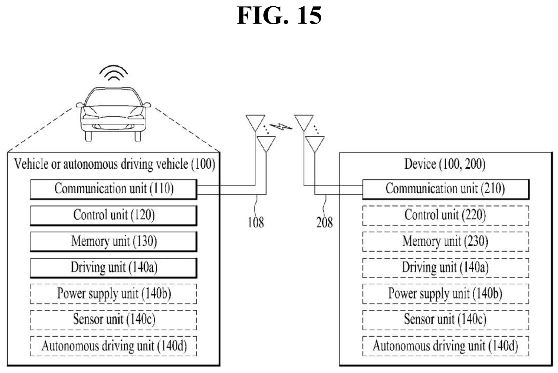

FIG. 15 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method of transmitting a signal by a user equipment (UE) in a wireless communication system, the method comprising:

   receiving downlink control information (DCI) for uplink scheduling; and
   transmitting, based on the DCI, a physical uplink shared channel (PUSCH) on which channel state information (CSI) is multiplexed,
   wherein based on a rank of the PUSCH transmission being greater than 4 and the PUSCH including a plurality of codewords (CWs), the CSI is multiplexed on a CW having a highest modulation and coding scheme (MCS) among the plurality of CWs, and

wherein the UE does not expect that an uplink shared channel (UL-SCH) indicator field in the DCI is set to a first value for not performing UL-SCH transmission.

2. The method of claim 1, wherein based on the rank of the PUSCH transmission being greater than 4 and the PUSCH including the plurality of CWs, all of the plurality of CWs include UL-SCHs, respectively.

3. The method of claim 1, wherein based on the rank of the PUSCH transmission being greater than 4 and the PUSCH including the plurality of CWs, no CW is configured to include only the CSI.

4. The method of claim 1, wherein the DCI includes the UL-SCH indicator field, and
wherein based on the rank of the PUSCH transmission being greater than 4 and the PUSCH including the plurality of CWs, the UE assumes that the UL-SCH indicator field is set to a second value for performing the UL-SCH transmission.

5. The method of claim 1, wherein based on the rank of the PUSCH transmission being greater than 4 and the PUSCH including the plurality of CWs, the UE assumes that a size of the UL-SCH indicator field is 0 bits.

6. The method of claim 1, wherein the CSI and a first UL-SCH are multiplexed on the CW having the highest MCS, and
wherein a second UL-SCH is multiplexed on another CW without the CSI.

7. The method of claim 1, wherein based on the rank of the PUSCH transmission being greater than 4 and the PUSCH including the plurality of CWs, the UL-SCH indicator field is configured to provide information other than information about whether to perform the UL-SCH transmission.

8. The method of claim 1, wherein a size of the UL-SCH indicator field in the DCI is determined based on the rank of the PUSCH transmission.

9. The method of claim 1, wherein the DCI includes a CSI request field set to a non-zero value.

10. A computer-readable recording medium having recorded thereon a program for performing the method of claim 1.

11. An apparatus for wireless communication, the apparatus comprising:

a memory configured to store instructions; and
a processor configured to perform operations by executing the instructions,
wherein the operations of the processor include:

receiving downlink control information (DCI) for uplink scheduling; and
transmitting, based on the DCI, a physical uplink shared channel (PUSCH) on which channel state information (CSI) is multiplexed,
wherein based on a rank of the PUSCH transmission being greater than 4 and the PUSCH including a plurality of codewords (CWs), the CSI is multiplexed on a CW having a highest modulation and coding scheme (MCS) among the plurality of CWs, and
wherein the apparatus does not expect that an uplink shared channel (UL-SCH) indicator field in the DCI is set to a first value for not performing UL-SCH transmission.

12. The apparatus of claim 11, further comprising a transceiver,
wherein the apparatus is a user equipment (UE) operating in a wireless communication system.

13. The apparatus of claim 11, wherein the apparatus is a processing device configured to control a user equipment (UE) operating in a wireless communication system.

14. A method of receiving a signal by a base station (BS) in a wireless communication system, the method comprising:

transmitting downlink control information (DCI) for uplink scheduling; and
receiving, based on the DCI, a physical uplink shared channel (PUSCH) on which channel state information (CSI) is multiplexed,

wherein based on a rank of the PUSCH transmission being greater than 4 and the PUSCH including a plurality of codewords (CWs), the BS sets a uplink shared channel (UL-SCH) indicator field in the DCI to a second value for UL-SCH scheduling for all of the plurality of CWs, and obtains the CSI from a CW having a highest modulation and coding scheme (MCS) among the plurality of CWs.

15. A base station (BS) for wireless communication, the BS comprising:

a memory configured to store instructions; and
a processor configured to perform operations by executing the instructions,
wherein the operations of the processor include:

transmitting downlink control information (DCI) for uplink scheduling; and
receiving, based on the DCI, a physical uplink shared channel (PUSCH) on which channel state information (CSI) is multiplexed,
wherein based on a rank of the PUSCH transmission being greater than 4 and the PUSCH including a plurality of codewords (CWs), the BS sets a uplink shared channel (UL-SCH) indicator field in the DCI to a second value for UL-SCH scheduling for all of the plurality of CWs, and obtains the CSI from a CW having a highest modulation and coding scheme (MCS) among the plurality of CWs.

# FIG. 1

# FIG. 2

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

| PDCCH | | | | | PUSCH | | |

# FIG. 7

```
┌────────┐                                    ┌────────┐
│   UE   │                                    │   BS   │
└────────┘                                    └────────┘
    │                                              │
    │   Configuration Information related to CSI (710)
    │ ◄────────────────────────────────────────────│
    │                                              │
    │          RS(e.g., CSI-RS) (720)              │
    │ ◄────────────────────────────────────────────│
    │                                              │
    │   Calculate CSI (730)                        │
    │ ⤹                                            │
    │                                              │
    │          Report CSI (740)                    │
    │ ─────────────────────────────────────────────►│
    │                                              │
```

# FIG. 8

TRP 1

TRP 2

Layer Group #1
for CW#1

Layer Group #1
for CW#2

UE 1

**(a)**

TRP 1

TRP 2

Layer Group #1
for CW#1

Layer Group #2
for CW#2

UE 1

**(b)**

# FIG. 9

# FIG. 10

# FIG. 11

# FIG. 12

## FIG. 13

## FIG. 14

Device(100, 200)

# FIG. 15

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108

208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

| | International application No. |
|---|---|
| | **PCT/KR2024/009204** |

| A. | CLASSIFICATION OF SUBJECT MATTER |
|---|---|

**H04B 7/0456**(2017.01)i; **H04B 7/0404**(2017.01)i; **H04B 7/06**(2006.01)i; **H04W 72/231**(2023.01)i; **H04W 72/232**(2023.01)i; **H04W 72/21**(2023.01)i; **H04W 72/1268**(2023.01)i; **H04W 8/24**(2009.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04B 7/0456(2017.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하향링크 제어 정보(DCI, downlink control information), 채널상태정보(CSI, channel state information), 코드워드(CW, codeword), 랭크(rank), UL-SCH(uplink shared channel), PUSCH(physical uplink shared channel)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | QUALCOMM INCORPORATED. Enhancements for 8 Tx UL transmissions. R1-2305324, 3GPP TSG RAN WG1 #113. 14 May 2023. See pages 22 and 24. | 1-4,7,9-11,14-15 |
| Y | | 5-6,8,12-13 |
| Y | HUAWEI. Introduction of Rel-18 MIMO Evolution for Downlink and Uplink. R1-2306315, 3GPP TSG-RAN WG1 Meeting #113. 12 June 2023. See pages 4 and 37. | 5-6 |
| DY | 3GPP; TSG RAN; NR; Multiplexing and channel coding (Release 17). 3GPP TS 38.212 V17.5.0. 30 March 2023. See page 31. | 8 |
| Y | KR 10-2019-0095328 A (SAMSUNG ELECTRONICS CO., LTD.) 14 August 2019 (2019-08-14) See paragraph [0064]; and claim 1. | 12-13 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2024** | **21 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/009204** |

### C.    DOCUMENTS CONSIDERED TO BE RELEVANT

| Category* | Citation of document, with indication, where appropriate, of the relevant passages | Relevant to claim No. |
| --- | --- | --- |
| A | 3GPP: TSG RAN; NR; Physical layer procedures for data (Release 17). 3GPP TS 38.214 V17.6.0. 26 June 2023.<br>    See pages 137-139. | 1-15 |

Form PCT/ISA/210 (second sheet) (July 2022)

**INTERNATIONAL SEARCH REPORT**
Information on patent family members

International application No.

**PCT/KR2024/009204**

| Patent document cited in search report | | | Publication date (day/month/year) | Patent family member(s) | | | Publication date (day/month/year) |
|---|---|---|---|---|---|---|---|
| KR | 10-2019-0095328 | A | 14 August 2019 | CN | 110063039 | A | 26 July 2019 |
| | | | | CN | 110063039 | B | 08 February 2022 |
| | | | | CN | 114448589 | A | 06 May 2022 |
| | | | | EP | 3535920 | A1 | 11 September 2019 |
| | | | | EP | 3535920 | B1 | 27 January 2021 |
| | | | | EP | 3806380 | A1 | 14 April 2021 |
| | | | | EP | 3806380 | B1 | 26 April 2023 |
| | | | | EP | 4221051 | A1 | 02 August 2023 |
| | | | | ES | 2860475 | T3 | 05 October 2021 |
| | | | | ES | 2948867 | T3 | 20 September 2023 |
| | | | | JP | 2020-501456 | A | 16 January 2020 |
| | | | | JP | 2022-116039 | A | 09 August 2022 |
| | | | | JP | 2024-026155 | A | 28 February 2024 |
| | | | | JP | 7073378 | B2 | 23 May 2022 |
| | | | | JP | 7392035 | B2 | 05 December 2023 |
| | | | | KR | 10-2023-0141888 | A | 10 October 2023 |
| | | | | MX | 2019006695 | A | 21 August 2019 |
| | | | | MX | 2021013392 | A | 25 November 2021 |
| | | | | US | 10375681 | B2 | 06 August 2019 |
| | | | | US | 10492184 | B2 | 26 November 2019 |
| | | | | US | 11019607 | B2 | 25 May 2021 |
| | | | | US | 11683806 | B2 | 20 June 2023 |
| | | | | US | 11711811 | B2 | 25 July 2023 |
| | | | | US | 2018-0167931 | A1 | 14 June 2018 |
| | | | | US | 2018-0167932 | A1 | 14 June 2018 |
| | | | | US | 2020-0077386 | A1 | 05 March 2020 |
| | | | | US | 2021-0274493 | A1 | 02 September 2021 |
| | | | | US | 2021-0329626 | A1 | 21 October 2021 |
| | | | | WO | 2018-106063 | A1 | 14 June 2018 |

Form PCT/ISA/210 (patent family annex) (July 2022)